(19) **Europäisches Patentamt**

**European Patent Office**

**Office européen des brevets**

(11) **EP 1 390 638 B1**

(12) **EUROPÄISCHE PATENTSCHRIFT**

(45) Veröffentlichungstag und Bekanntmachung des Hinweises auf die Patenterteilung:
**24.11.2004 Patentblatt 2004/48**

(21) Anmeldenummer: 02747313.1

(22) Anmeldetag: **16.05.2002**

(51) Int Cl.⁷: **F16D 65/21**

(86) Internationale Anmeldenummer:
**PCT/EP2002/005431**

(87) Internationale Veröffentlichungsnummer:
**WO 2002/095257 (28.11.2002 Gazette 2002/48)**

(54) **ELEKTROMECHANISCHE SCHEIBENBREMSE MIT SPIELFREIER BETÄTIGUNG**

ELECTROMECHANICAL BRAKE WITH ZERO BACKLASH ACTUATION

FREIN ELECTROMECANIQUE AVEC ACTIONNEMENT SANS JEU

(84) Benannte Vertragsstaaten:
**AT BE CH CY DE DK ES FI FR GB GR IE IT LI LU MC NL PT SE TR**

(30) Priorität: **21.05.2001 DE 10124754**

(43) Veröffentlichungstag der Anmeldung:
**25.02.2004 Patentblatt 2004/09**

(73) Patentinhaber: **Estop GmbH**
**82284 Grafrath (DE)**

(72) Erfinder: **SCHAUTT, Martin**
**80333 München (DE)**

(74) Vertreter: **Beyer, Andreas, Dr.**
**Wuesthoff & Wuesthoff,**
**Patent- und Rechtsanwälte,**
**Schweigerstrasse 2**
**81541 München (DE)**

(56) Entgegenhaltungen:
WO-A-98/14715            DE-A- 19 819 564
DE-B- 1 078 886          US-A- 3 869 024

**Beschreibung**

Die Erfindung betrifft eine elektromechanische Bremse, insbesondere für Fahrzeuge, mit einem elektrischen Aktuator, der eine Betätigungskraft erzeugt und auf zumindest ein Reibglied wirkt, um dieses zum Hervorrufen einer Reibkraft gegen ein drehbares, abzubremsendes Bauteil der Bremse zu drücken, und einer zwischen dem Reibglied und dem elektrischen Aktuator angeordneten Selbstverstärkungseinrichtung, die zur Selbstverstärkung der vom elektrischen Aktuator erzeugten Betätigungskraft führt und wenigstens einen Keil mit einem Steigungswinkel $\alpha$ aufweist, der sich an einem zugehörigen Widerlager abstützt.

Eine elektromechanische Bremse mit einer Selbstverstärkungseinrichtung ist aus der deutschen Patentschrift DE 198 19 564 C2 bekannt. Bei der in diesem Dokument beschriebenen Bremse tritt das Problem auf, dass das Maß der Selbstverstärkung, festgelegt durch die Wahl des Steigungswinkels $\alpha$, immer nur so groß bemessen werden kann, dass unabhängig vom Reibungskoeffizienten $\mu$ zwischen dem Reibbelag und dem abzubremsenden Bauteil, der sich je nach Betriebszustand der Bremse ändert, entweder immer eine Druckkraft oder immer eine Zugkraft auf den Keil der Selbstverstärkungseinrichtung ausgeübt wird. Ein Vorzeichenwechsel der Aktuatorkraft soll vermieden werden, weil sonst das im Aktuator vorhandene Spiel überfahren werden muss, was zu undefinierten Zuständen und damit zu unerwünschten Schwankungen der Regelgröße (Bremskraft) führt. Aufgrund dieser Beschränkungen kann bei der bekannten elektromechanischen Bremse der Bereich der optimalen Selbstverstärkung, nämlich der Bereich, in dem der Wert des Reibungskoeffizienten $\mu$ zumindest etwa dem Wert tan $\alpha$ entspricht, nicht genutzt werden, weil am Punkt der optimalen Selbstverstärkung, d.h. wenn der Reibungskoeffizient p denselben Wert wie der Tangens des Steigungswinkels $\alpha$ hat, die erforderliche Betätigungskraft, also die Aktuatorkraft, ihre Richtung wechselt.

Der Erfindung liegt deshalb die Aufgabe zugrunde, eine verbesserte elektromechanische Bremse mit Selbstverstärkung bereitzustellen, deren Arbeitsbereich im Bereich der optimalen Selbstverstärkung liegen kann, ohne dass es zu negativen Auswirkungen hinsichtlich ihrer Regelbarkeit kommt.

Ausgehend von einer wie eingangs beschriebenen elektromechanischen Bremse ist diese Aufgabe erfindungsgemäß dadurch gelöst, dass der elektrische Aktuator zwei Antriebe aufweist, die auf den Keil der Selbstverstärkungseinrichtung wirken und die zum Erzeugen der Betätigungskraft gegeneinander arbeiten können, wobei die beiden Antriebe im Bereich geringer Betätigungskräfte, d.h. in einem Bereich tan $\alpha$ ungefähr gleich $\mu$, zur Erzeugung der Betätigungskraft gegeneinander arbeiten. Mit "gegeneinander arbeiten" ist hier gemeint, dass die von den beiden Antrieben auf den Keil der Selbstverstärkungseinrichtung aufgebrachten Kräfte gegensinnig sind. Gemäß einer Ausführungsform der erfindungsgemäßen Bremse ziehen beide Antriebe im Bereich geringer Betätigungskräfte zur Erzeugung der Betätigungskraft an dem Keil der Selbstverstärkungseinrichtung, derart, dass ein die Betätigungskraft darstellender Zugkraftüberschuss in Betätigungsrichtung resultiert. In einer alternativen Ausführungsform drücken beide Antriebe dann, wenn nur geringe Betätigungskräfte gefordert sind, zur Erzeugung der Betätigungskraft auf den Keil der Selbstverstärkungseinrichtung, derart, dass ein die Betätigungskraft darstellender Druckkraftüberschuss in Betätigungsrichtung resultiert.

Erfindungsgemäß arbeiten demnach die beiden Antriebe des elektrischen Aktuators dann, wenn nur geringe Betätigungskräfte erforderlich sind, wenn also die Selbstverstärkung der Bremse hoch ist (wenn also tan $\alpha$ ungefähr gleich $\mu$ ist), in einer spielfreien Weise zusammen, denn durch das Gegeneinanderarbeiten der beiden Antriebe tritt das im Aktuator vorhandene Spiel nicht in Erscheinung. Ein Vorzeichenwechsel der Aktuatorkraft, zu dem es im Bereich hoher Selbstverstärkung leicht kommen kann, hat deshalb keine negativen Auswirkungen, sondern wird spielfrei überwunden. Die erfindungsgemäße Bremse kann deshalb ohne weiteres im Bereich der optimalen Selbstverstärkung betrieben werden, was auch bedeutet, dass der elektrische Aktuator weniger kraftvoll sein muss und deshalb kompakter und leichter ausgeführt werden kann. Neben einer Platz- und Gewichtsersparnis ergeben sich daraus auch Vorteile für das dynamische Verhalten des Aktuators.

In Betriebszuständen, in denen der Wert des Reibungskoeffizienten $\mu$ stark vom Wert tan $\alpha$ abweicht, muss der elektrische Aktuator eine größere Betätigungskraft aufbringen, um die geforderte Bremskraft bzw. das geforderte Bremsmoment zu erzielen. Gemäß einer bevorzugten Ausführungsform der erfindungsgemäßen Bremse ist deshalb die Arbeitsrichtung der beiden Antriebe des elektrischen Aktuators umsteuerbar, derart, dass die beiden Antriebe zur Erzielung höherer Betätigungskräfte miteinander (also gleichsinnig und nicht wie zuvor gegensinnig) arbeiten. Zwar können in solchen Betriebszuständen dann Situationen eintreten, in denen das Spiel eines Aktuators überwunden werden muss, jedoch führt dies in den seltenen Fällen, in denen die beiden Antriebe zur Erzielung höherer Betätigungskräfte miteinander arbeiten müssen, beispielsweise bei einer Notbremsung, zu keinem wirklichen Nachteil, da bei den dann wirkenden Kräften das Aktuatorspiel sehr rasch überwunden wird und allenfalls als kleiner Schlag, ausgelöst durch den Kraftsprung beim Wiedereingriffkommen desjenigen Aktustors, dessen Spiel überwunden wurde, im Betätigungsorgan der Bremse spürbar ist. Bei bekanntem Spiel kann dieser Kraftsprung, falls gewünscht, auch ausgeregelt werden.

Generell ist der Steigungswinkel $\alpha$ der Selbstverstärkungseinrichtung bei der erfindungsgemäßen Bremse so zu wählen, dass die Bremse die zur Erzeugung des maximal geforderten Bremsmomentes erforderliche Andrückkraft auch bei dem im Betrieb auftretenden maximalem bzw. minimalem Reibungskoeffizienten $\mu$ noch erzeugen kann. Mit anderen Worten, der Steigungswinkel $\alpha$ sollte so gewählt sein, dass $\mu_{min} < \tan \alpha < \mu_{max}$ gilt.

Vorzugsweise sind die beiden Antriebe des elektrischen Aktuators der erfindungsgemäßen Bremse als Linearaktuatoren ausgeführt, die beide unmittelbar auf den Keil oder die Keile der Selbstverstärkungseinrichtung wirken. Bei einer solchen Ausführungsform ist das Reibglied, üblicherweise ein Reibbelag, vorzugsweise fest mit dem Keil verbunden, so dass jede Bewegung des Keiles verlustlos auf das Reibglied übertragen wird. Gemäß einer bevorzugten Ausführungsform weist jeder Linearaktuator einen Elektromotor mit integrierter Spindelmutter, eine als Schubstange ausgebildete Spindel, die mit der Spindelmutter zusammenwirkt, und einen Drehwinkelgeber oder einen anderen Positionssensor auf. Anhand der von den Positionssensoren der Linearaktuatoren gelieferten Signale lässt sich zum einen das im elektrischen Aktuator vorhandene mechanische Spiel und zum anderen ohne weiteres die jeweilige Position des Keils ermitteln.

Bei bevorzugten Ausführungsformen der erfindungsgemäßen Bremse ist der Keil (oder sind die Keile) der Selbstverstärkungseinrichtung positionsgeregelt. Vorzugsweise ist die Positionsregelung des Keiles eines Kaskadenregelung mit einem äußeren Regelkreis, dessen Regelgröße das Bremsmoment und dessen Stellgröße die Position des mit dem Keil verbundenen Reibgliedes ist, und mit einem inneren Regelkreis, dessen Regelgröße die aus den Positionssignalen der Linearaktuatoren ermittelte Position des mit dem Keil verbundenen Reibgliedes und dessen Stellgröße der Motorstrom oder die Motorspannung der Elektromotoren der Linearaktuatoren ist. Eine Positionsregelung des Keiles und insbesondere die beschriebene Kaskadenregelung ist regelungstechnisch vorteilhaft, da zwischen dem Reibungskoeffizienten $\mu$ und der Keilposition lediglich ein linearer Zusammenhang besteht. Eine solche Regelung ist daher schnell, genau und störunanfällig.

Bei bevorzugten Ausführungsbeispielen der erfindungsgemäßen Bremse weist der Keil oder jeder Keil der Selbstverstärkungseinrichtung für jede der beiden Drehrichtungen des abzubremsenden Bauteils wenigstens eine Keilfläche auf. Vorzugsweise ist der Steigungswinkel der für die beiden Drehrichtungen vorgesehenen unterschiedlichen Keilflächen der gleiche, so dass der Keil einen symmetrischen Aufbau hat, jedoch können die Steigungswinkel für Vorwärtsdrehung und Rückwärtsdrehung des abzubremsenden Bauteils auch unterschiedlich gewählt werden.

Üblicherweise sind Bremsen nicht mit nur einem Reibglied, sondern mit zumindest zwei Reibgliedern versehen, die einander gegenüberliegen und auf unterschiedliche Seiten des abzubremsenden Bauteils einwirken. Vorzugsweise stützt sich deshalb das Widerlager für den Keil der Selbstverstärkungseinrichtung an einem Sattel ab, der das abzubremsende Bauteil übergreift und der mit dem weiteren Reibglied verbunden ist. Bei einer besonders bevorzugten Ausführungsform der erfindungsgemäßen Bremse ist das abzubremsende Bauteil eine Bremsscheibe und der Sattel ist ein Schwimmsattel. Schwimmsattelbremsen und deren Funktionsprinzip sind Fachleuten auf dem hier in Rede stehenden Gebiet wohlbekannt, so dass weitere Erläuterungen hierzu nicht erforderlich sind.

Wie schon bei der aus der DE 198 19 564 C2 bekannten Bremse ist auch bei der erfindungsgemäßen Bremse vorzugsweise eine Einrichtung zum Vergleichen eines Sollwertes der Reibkraft mit dem Istwert der Reibkraft vorhanden, die bei einer Abweichung des Istwertes vom Sollwert den elektrischen Aktuator zum entsprechenden Erhöhen oder Verringern der erzeugten Betätigungskraft ansteuert und so den Istwert dem Sollwert der Reibkraft angleicht. Mit anderen Worten, die erfindungsgemäße Bremse ist vorzugsweise reibkraftgeregelt. Die Reibkraft entspricht bis auf ihr Vorzeichen der Bremskraft bzw. dem Bremsmoment.

Alle Ausführungsformen der erfindungsgemäßen Bremse können so ausgestattet sein, dass der Steigungswinkel $\alpha$ der Keilfläche mit zunehmender Verschiebung des Keiles in Betätigungsrichtung abnimmt, d.h. der Steigungswinkel wird über den Zustellweg der Bremse kleiner. Auf diese Weise lässt sich ein noch besseres Regelungsverhalten der erfindungsgemäßen Bremse erzielen.

In einer abgewandelten Ausführungsform der erfindungsgemäßen Bremse ist der elektrische Aktuator ein Linearmotor, dessen Schubglied auf den Keil der Selbstverstärkungseinrichtung wirkt. Da ein Linearmotor per se kein Spiel aufweist, sind bei einer solchen Ausführungsform keine zwei gegeneinander arbeitenden Antriebe erforderlich, sondern es genügt ein einziger Antrieb.

Ein Ausführungsbeispiel einer erfindungsgemäßen Bremse wird im folgenden anhand der beigefügten, schematischen Figuren näher erläutert. Es zeigt:

Fig. 1     eine als Scheibenbremse ausgeführte erfindungsgemäße elektromechanische Bremse von der Seite,

Fig. 2     eine räumliche Ansicht der erfindungsgemäßen Bremse von schräg unten,

Fig. 3     die Ansicht aus Fig. 2 ohne Nachstellvorrichtung und Widerlager,

Fig. 4     den Schnitt II-II aus Fig. 1,

Fig. 5     den Schnitt III-III aus Fig. 1,

Fig. 6     den Schnitt IV-IV aus Fig. 4,

Fig. 7 eine Schnittansicht gemäß Fig. 4, die den betätigten Zustand der erfindungsgemäßen Bremse bei Vorwärtsfahrt darstellt,

Fig. 8 die Schnittansicht aus Fig. 7, nun jedoch für einen betätigten Zustand der Bremse bei Rückwärtsfahrt,

Fig. 9 den Schnitt V-V aus Fig. 4,

Fig. 10 die Schnittansicht aus Fig. 4 mit weitgehend abgenutzten Reibbelägen, und

Fig. 11 ein die grundsätzliche Funktion der erfindungsgemäßen Bremse illustrierendes Schaubild.

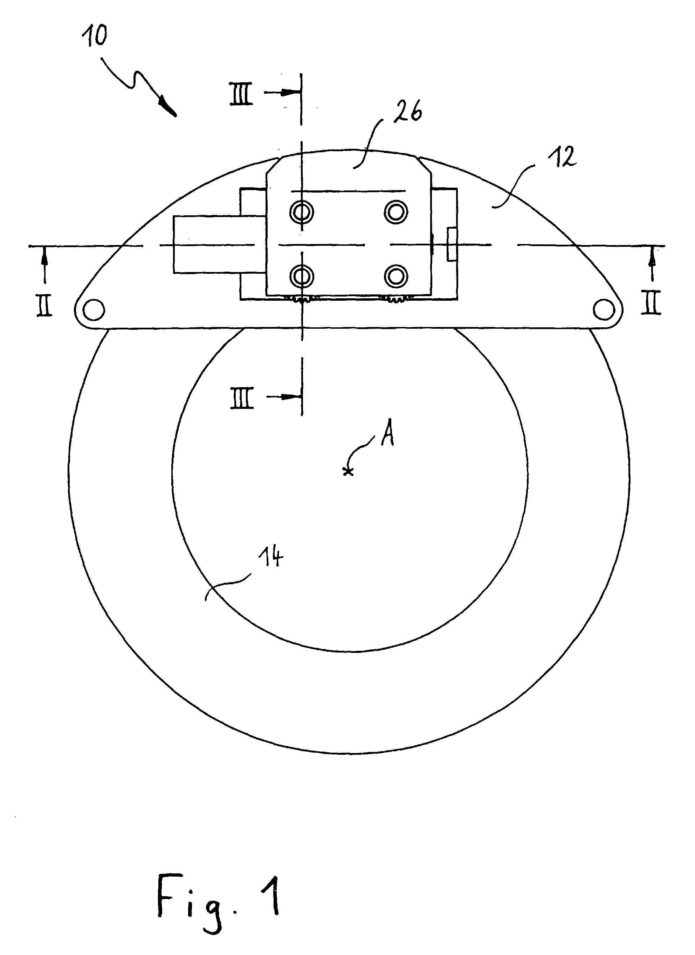

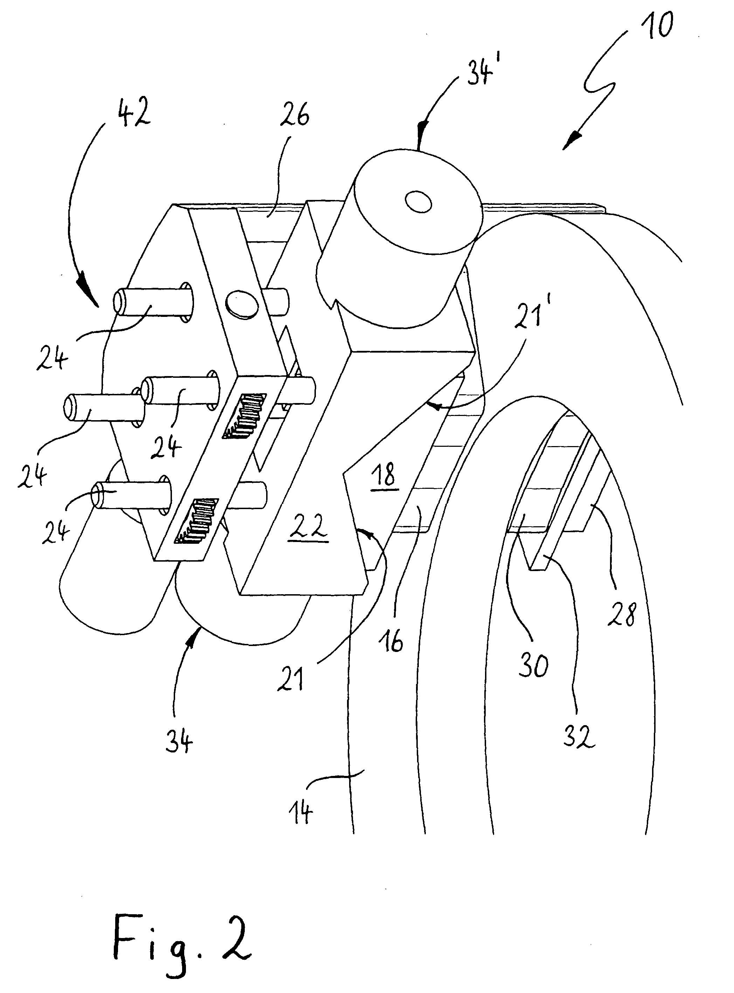

Die Fig. 1 und 2 zeigen eine als Scheibenbremse ausgebildete elektromechanische Bremse 10 mit einem Gehäuse 12 und einer um eine Achse A drehbaren Bremsscheibe 14.

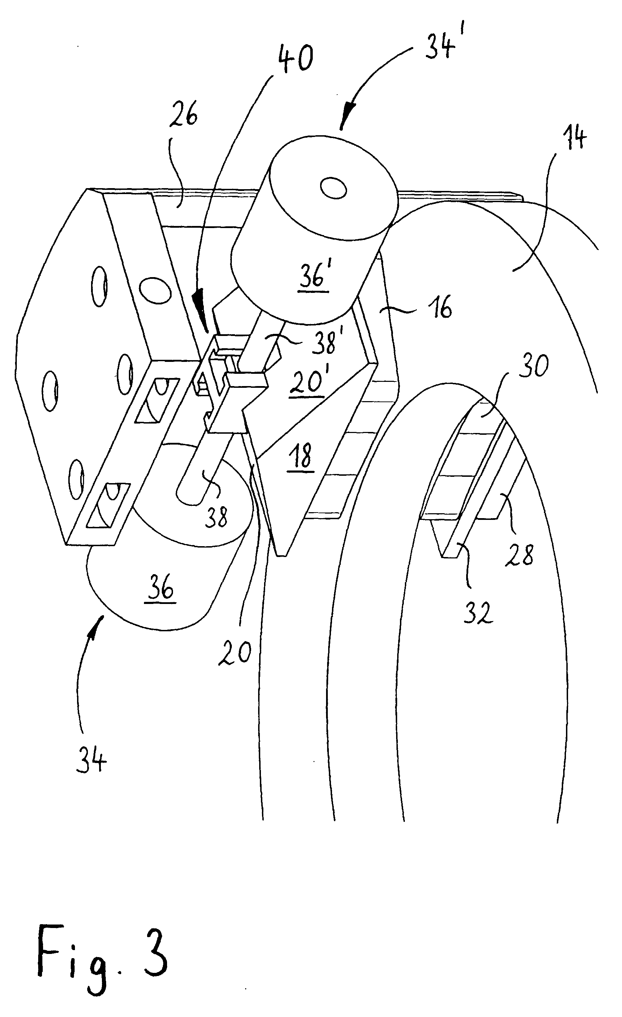

Wie besser aus den Fig. 3, 4 und 5 ersichtlich, weist die Bremse 10 einen ersten Reibbelag 16 auf, der mit der Vorderseite eines als Belagträger dienenden Keiles 18 fest verbunden ist, beispielsweise durch Kleben. Auf seiner Rückseite hat der Keil 18 für jede Drehrichtung der Bremsscheibe 14 eine Keilfläche 20 bzw. 20', die beide unter einem Steigungswinkel α zur Bremsscheibe 15 angeordnet sind und sich an komplementären Keilflächen 21, 21' eines blockförmigen Widerlagers 22 abstützen.

Das Widerlager 22 stützt sich über vier Gewindebolzen 24 an einem Bremssattel 26 (siehe Fig. 2 und 5) ab, der die Bremsscheibe 14 überspannt und einen zur Drehachse A hin gerichteten Arm 28 aufweist. Der Arm 28 dient zur Abstützung eines zweiten Reibbelages 30, der in üblicher Weise auf einer Belagträgerplatte 32 befestigt ist, die an der der Bremsscheibe 14 zugewandten Innenseite des Armes 28 anliegt.

Die Betätigungskraft der Bremse 10 wird von einem elektrischen Aktuator erzeugt, der zwei hier als Linearaktuatoren ausgeführte Antriebe 34 und 34' umfasst. Jeder Antrieb 34, 34' umfasst einen Elektromotor 36, 36' und eine von ihm angetriebene Schubstange 38, 38', die mit dem Keil 18 in Wirkverbindung steht. Im hier dargestellten Ausführungsbeispiel hat jeder Elektromotor 36, 36' eine integrierte Spindelmutter (nicht dargestellt) und die Schubstangen 38, 38' sind jeweils als mit der Spindelmutter zusammenwirkende Spindel ausgebildet. Ein ebenfalls nicht dargestellter Drehwinkelgeber in jedem Elektromotor 36, 36' ermöglicht die Bestimmung der genauen Position der zugehörigen Schubstange 38, 38' basierend auf den vom Elektromotor 36 oder 36' ausgeführten Umdrehungen und der Steigung des Spindeltriebes.

Der Keil 18 und das Widerlager 22 sind Teil einer Selbstverstärkungseinrichtung zur Verstärkung der von den Antrieben 34, 34' erzeugten Betätigungskraft.

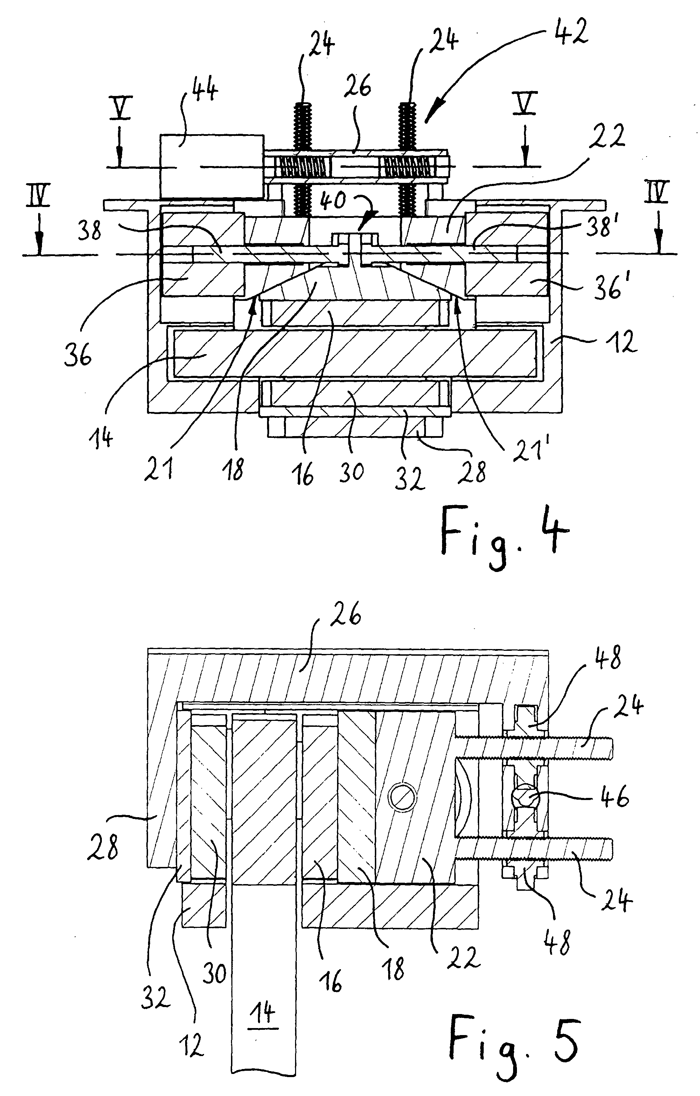

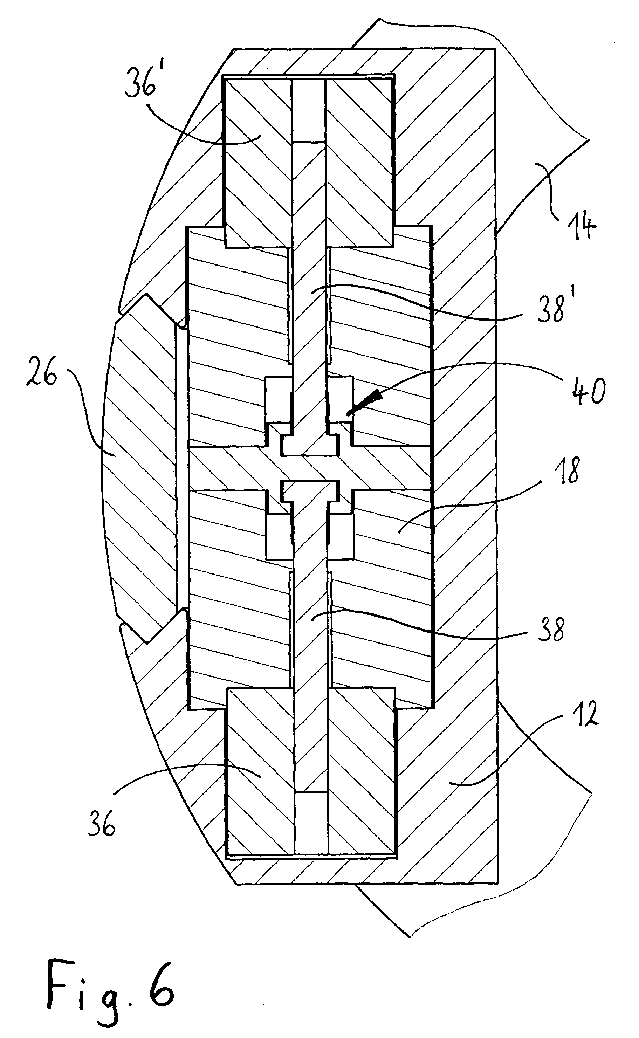

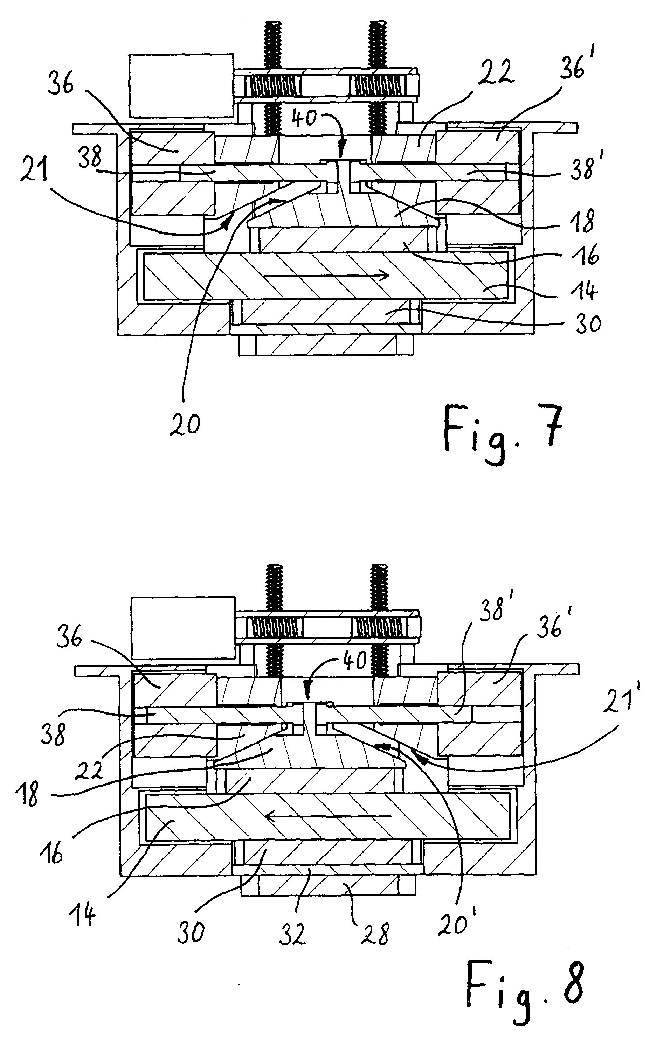

Hierzu sind die freien Enden der Schubstangen 38 und 38' in einer auf der Rückseite des Keiles 18 vorhandenen Aufnahme 40 so gelagert, dass eine Translationsbewegung der Schubstangen 38, 38' zu einer entsprechenden Verschiebung des Keiles 18 nach links oder rechts führt (siehe Fig. 3, 4 und 6). Zum Betätigen der Bremse 10 wird also der Keil 18 mit dem an ihm befestigten Reibbelag 16 in Drehrichtung der Bremsscheibe 14 verschoben (siehe Fig. 7 und 8), und zwar durch eine Translationsbewegung der beiden Schubstangen 38 und 38'. Dabei stützt sich der Keil 18 über seine eine Keilfläche 20 oder 20' an der zugehörigen, komplementären Keilfläche 21 oder 21' des Widerlagers 22 ab und bewegt sich nicht nur nach links oder rechts, sondern auch auf die Bremsscheibe 14 zu. Sobald der erste Reibbelag 16 in Kontakt mit der Bremsscheibe 14 kommt, entsteht eine Reaktionskraft, die von dem Reibbelag 16 über den Keil 18 und das Widerlager 22 auf den Bremssattel 26 übertragen wird. Letzterer ist schwimmend auf dem Gehäuse 12 der Bremse 10 gelagert und wird von der genannten Reaktionskraft solange verschoben, bis sich der zweite Reibbelag 30 ebenfalls an die Bremsscheibe 14 anlegt (Schwimmsattelprinzip). Jede weitere translatorische Verschiebung des Keiles 18 in Betätigungsrichtung führt nun zu einem stärkeren Anpressen der beiden Reibbeläge 16 und 30 an die Bremsscheibe 14 und damit zum gewünschten Bremsvorgang. Ein Lösen der Bremse erfolgt durch Rückverschiebung des Keiles 18 in seine in Fig. 4 wiedergegebene Ausgangsstellung. Zur Reibungsminderung können die Keilflächen 20, 20' und/oder die Widerlagerflächen 21, 21' beispielsweise mit Wälzkörpern (nicht dargestellt) versehen sein. Wie dargestellt, ist die Aufnahme 40 so ausgebildet, dass der Keil 18 sich in Richtung auf die Bremsscheibe 14 und von ihr weg bewegen kann, ohne dass die Schubstangen 38, 38' diese Bewegung mitmachen.

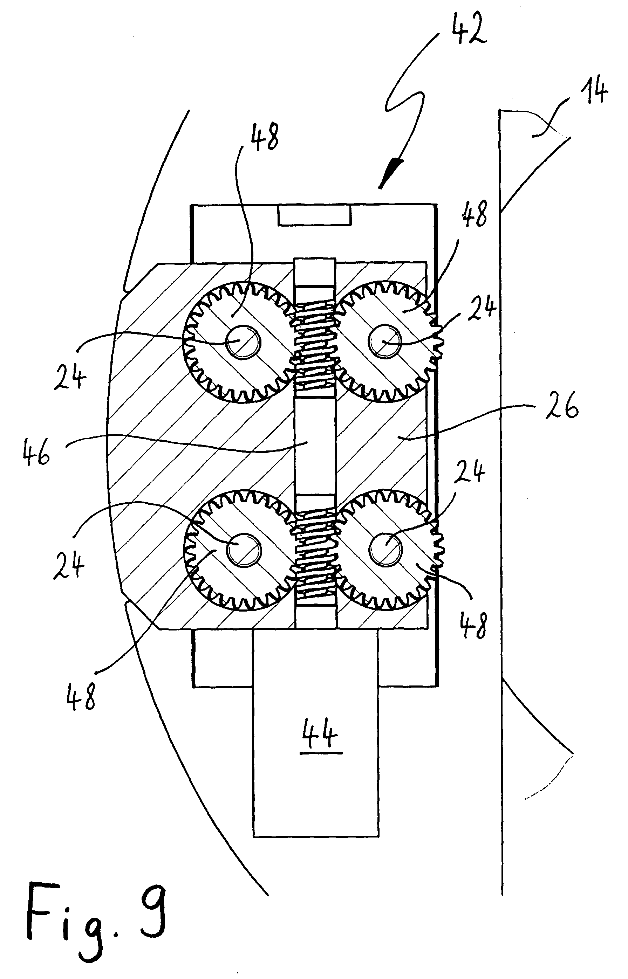

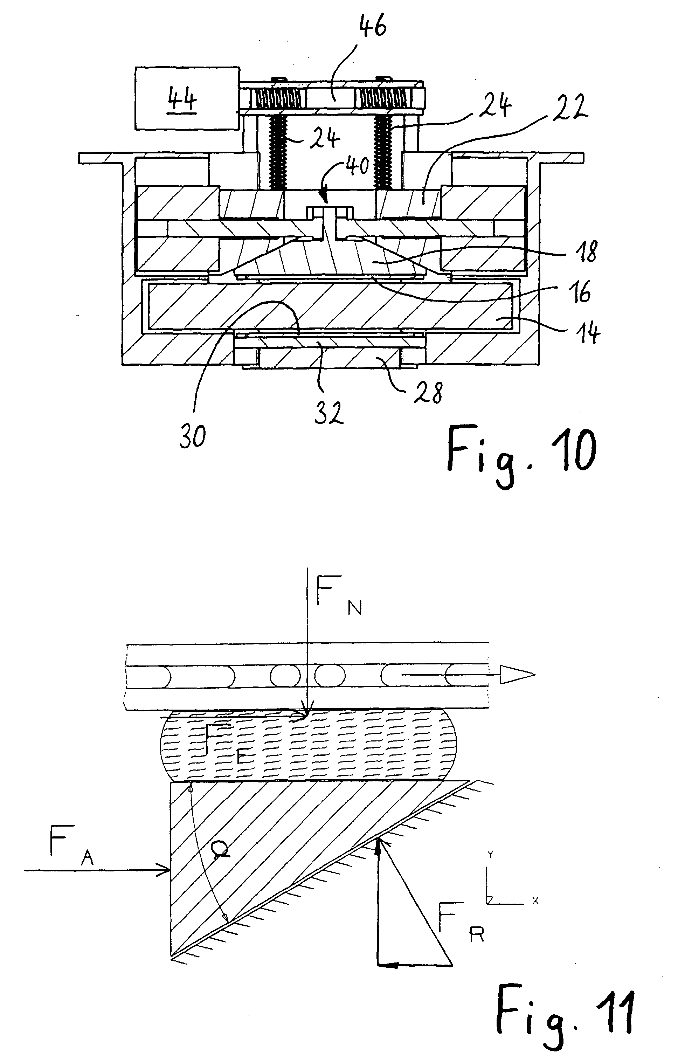

Damit die Bremse 10 einen sich abnutzenden Reibbelag 16 ausgleichen kann, ist eine allgemein mit 42 bezeichnete Nachstelleinrichtung vorhanden (siehe Fig. 2). Diese besteht (siehe Fig. 4, 5 und 9) aus einem Motor 44, der eine Schneckenwelle 46 treibt, die mit vier Zahnrädern 48 in Eingriff steht. Die Zahnräder 48 sind im Bremssattel 26 gelagert und weisen jeweils ein Innengewinde auf, das mit einem zugehörigen der Gewindebolzen 24 in Eingriff steht, welche mit dem Widerlager 22 fest verbunden sind (siehe Fig. 5). Die Zahnräder 48 fungieren demnach als Spindelmuttern eines Spindeltriebes, während die Gewindebolzen 24 die Spindelstangen darstellen. Im dargestellten Ausführungsbeispiel sind vier Gewindebolzen 24 vorhanden, von denen aufgrund des unterschiedlichen Drehsinnes der Zahnräder 48 zwei Gewindebolzen 24 ein Linksgewinde und die anderen beiden Gewindebolzen 24 ein Rechtsgewinde aufweisen. Mittels des Motors 44 kann die Nachstelleinrichtung 42 somit den Abstand des Widerlagers 22 vom Bremssattel 26 vergrößern, d.h. das Widerlager 22 in Richtung auf die Bremsscheibe 14 bewegen. Auf diese Weise kann das Lüftspiel der Bremse 10, d.h. der bei gelöster Bremse vorhandene Abstand zwischen der Bremsscheibe 14 und der Reibbelagoberfläche, konstant gehalten werden. Die Fig. 10 zeigt dies in einer Ansicht entsprechend Fig. 4, jedoch mit weitgehend abgenutzten Reibbelägen 16, 30.

Üblicherweise wird die Bremse 10 so ausgeführt sein, dass dann, wenn bei einer Bremsung ein zu großes Lüftspiel erkannt wird, eine Regelung die Nachstelleinrichtung 42 bei gelöster Bremse aktiviert, um das Lüftspiel wieder auf den konstruktiv vorgegebenen Wert zu verkleinern. Die Nachstelleinrichtung 42 ist vorzugsweise selbsthemmend ausgebildet, um eine unbeabsichtigte Verstellung des Lüftspieles zu verhindern.

Die hier beschriebene Nachstelleinrichtung 42 stellt eine Möglichkeit dar, den Reibbelagverschleiß auszugleichen. Andere Ausführungsformen der Bremse 10 können statt des genannten Elektromotors 44 einen Ultraschallmotor, ein Schrittschaltwerk, einen Schrittmotor oder einen anderen Antrieb aufweisen. Auch das Getriebe der Nachstelleinrichtung 42 kann abweichend ausgeführt sein, beispielsweise als Harmonikdrive-Getriebe. Des weiteren müssen nicht wie dargestellt, vier Gewindebolzen 24 vorhanden sein, sondern es können mehr oder weniger Gewindebolzen sein und es sind schließlich auch andere Mittel als Gewindebolzen denkbar, um die beschriebene Relativverschiebung des Widerlagers 22 zu erreichen.

Im folgenden wird die Funktion der elektromechanischen Bremse 10 und insbesondere der Selbstverstärkungseinrichtung anhand der Fig. 11 näher erläutert. Es wurde bereits erwähnt, dass die Selbstverstärkungseinrichtung für jede Drehrichtung der Bremsscheibe 14 eine Keilfläche 20 bzw. 20' aufweist, die sich an einer komplementär ausgebildeten Fläche 21 bzw. 21' des Widerlagers 22 abstützt. Im dargestellten Ausführungsbeispiel ist jede Keilfläche 20, 20' bezüglich der Bremsscheibe 14 unter einem wirksamen Keilwinkel $\alpha$ angeordnet. Dies muss jedoch nicht so sein, stattdessen kann der wirksame Keilwinkel für die eine Drehrichtung sich vom wirksamen Keilwinkel für die andere Drehrichtung unterscheiden. In Fig. 11 sind mit Pfeilen die Kräfte angegeben, die auf den Keil 18 wirken.

Es sind dies

$F_A$    die in den Keil 18 eingeleitete Eingangskraft,

$F_R$    die sich bei einer Bremsung ergebende, vom Widerlager 22 abzustützende Auflagerkraft, die sich in eine der Eingangskraft $F_A$ entgegengesetzte Kraft $F_{Rx}$ und eine senkrecht zur Bremsscheibe stehende Druckkraft $F_{Ry}$ aufteilen lässt,

$F_N$    die der Kraft $F_{Ry}$ entgegengerichtete Normalkraft an der Bremsscheibe, und

$F_F$    die am Keil bzw. am Reibglied entstehende Reibkraft.

Gemäß diesem Kräftegleichgewicht hängt die Reibkraft bzw. das Reibmoment an der Bremsscheibe 14 entsprechend der Beziehung

$$F_A \;=\; -F_F \bullet \left[ 1 - \frac{\tan\alpha}{\mu} \right]$$

lediglich vom Steigungswinkel $\alpha$, dem eine Störgröße darstellenden Reibungskoeffizient p und der Eingangskraft $F_A$ ab.

Die Eingangskraft $F_A$, die gemäß Fig. 11 bei einer Bremsbetätigung auf den Keil 18 wirkt, wird von den beiden Antrieben 34, 34' erzeugt. Bei gegebenem Reibungskoeffizienten $\mu$ hängt das Maß der Selbstverstärkung der eingeleiteten Kraft $F_A$ nur vom Steigungswinkel $\alpha$ ab: Im Gleichgewichtszustand, d.h. wenn der Wert des Reibungskoeffizienten $\mu$ gleich dem Tangens des Steigungswinkels $\alpha$ ist, braucht die Bremse 10 - wenn der Reibbelag 16 in Kontakt mit der Bremsscheibe 14 ist - .zur weiteren Bremsung keine Eingangskraft $F_A$ mehr. Dieser Gleichgewichtszustand wird deshalb auch als der Punkt der optimalen Selbstverstärkung bezeichnet. Ist $\mu$ kleiner als tan $\alpha$, muss eine Eingangskraft $F_A$ vorhanden sein, um eine Bremsung aufrechtzuerhalten. Ist hingegen $\mu$ größer als tan $\alpha$, läuft die Bremse von alleine zu, d.h. die Bremskraft verstärkt sich ohne Vorhandensein einer Eingangskraft $F_A$ immer mehr bis zum Blockieren der Bremse. Soll dieser Blockierzustand vermieden bzw. eine gewünschte Bremskraft aufrechterhalten werden, muss eine negative Eingangskraft $F_A$, d. h. eine in entgegengesetzter Richtung wirkende Eingangskraft $F_A$ auf den Keil 18 aufgebracht werden.

Damit die Eingangskraft $F_A$ klein sein kann, ist man bestrebt, die Bremse 10 in einem Bereich zu betreiben, in dem der Reibungskoeffizient $\mu$ zumindest ungefähr gleich dem Tangens des Steigungswinkels $\alpha$ ist. In diesem Bereich geringer Betätigungskräfte arbeiten die beiden Antriebe 34 und 34' gegeneinander, d.h. die beiden Antriebe 34, 34' leiten über die Schubstangen 38, 38' einander entgegengerichtete Kräfte in den Keil 18 ein. Die entgegengerichteten Kräfte sind dabei so bemessen, dass ein Kraftüberschuss in der Richtung resultiert, in die der Keil 18 bei einer Betätigung verschoben werden soll. Die beiden von den Antrieben 34, 34' in den Keil 18 eingeleiteten Kräfte können beide Druckkräfte oder auch beide Zugkräfte sein, wichtig ist lediglich, dass ein Kraftüberschuss in der gewünschten Richtung resultiert.

Durch das gegensinnige Arbeiten der beiden Antriebe 34, 34' ist die Betätigung des Keiles 18 spielfrei. Diese Spielfreiheit ist für den Betrieb der Bremse 10 im Bereich der optimalen Selbstverstärkung wichtig, denn in diesem Bereich kann es aufgrund des sich während des Betriebes der Bremse ändernden Reibungskoeffizienten $\mu$ zu einem schnellen Wechsel zwischen Zuständen, in denen $\mu$ kleiner tan $\alpha$ ist, und Zuständen kommen, in denen $\mu$ größer tan $\alpha$ ist. Mit anderen Wor-

ten, in dem Bereich um den Punkt der optimalen Selbstverstärkung herum kann es einen schnellen Wechsel zwischen Zuständen geben, in denen eine positive Eingangskraft $F_A$ gefordert ist, und Zuständen, in denen eine negative Eingangskraft $F_A$ notwendig ist, um eine bestimmte, gewünschte Bremskraft aufrechtzuerhalten. Wäre der Aktuator nicht spielfrei, würde bei jedem Vorzeichenwechsel der Eingangskraft $F_A$ das im Aktuator vorhandene Spiel durchlaufen werden, was zu undefinierten Zuständen und damit zu einer schlechten Regelbarkeit der Bremse führen würde. Die spielfreie Betätigung mittels der beiden im Normalfall gegensinnig arbeitenden Antriebe 34, 34' vermeidet dieses Problem wirkungsvoll.

In Betriebszuständen, in denen sich der Wert des Reibungskoeffizienten $\mu$ stark vom Tangens des Steigungswinkels $\alpha$ unterscheidet, sind größere Eingangskräfte $F_A$ erforderlich, um eine gewünschte Bremswirkung zu erzielen. In solchen Betriebszuständen arbeiten die beiden Antriebe 34, 34' miteinander, d. h. sie erzeugen gleichgerichtete Kräfte, indem einer der Antriebe auf den Keil 18 drückt und der andere Antrieb am Keil 18 zieht. Damit ein solches gleichsinniges Wirken der Antriebe möglich ist, sind beide Antriebe 34, 34' umsteuerbar ausgeführt, d.h. ihre Betätigungsrichtung lässt sich umkehren. Im gleichsinnigen Betrieb der Antriebe 34, 34' arbeitet der Aktuator der Bremse 10 nicht mehr spielfrei. Dies ist in der Praxis jedoch vernachlässigbar, da Betriebszustände, in denen erhöhte Eingangskräfte $F_A$ erforderlich sind, nur selten auftreten und darüber hinaus in solchen Betriebszuständen ein eventuelles Überfahren des Aktuatorspiels tolerierbar ist.

Wie bereits kurz angedeutet wurde, kann sich der Reibungskoeffizient $\mu$ in Abhängigkeit der Belastung der Bremse relativ stark ändern. Jede Reibwertänderung während eines Bremsvorgangs führt jedoch zu einer Änderung der Reibkraft $F_F$ und somit zu einer sich ändernden Verzögerung des abzubremsenden Bauteiles der Bremse, welches vorliegend durch die Bremsscheibe 14 gebildet ist. Um diese unerwünschten Reibwertänderungen auszuregeln, ist die dargestellte Scheibenbremse 10 mit einer nicht gezeigten Sensorik versehen, die eine ständige Messung der Reibkraft gestattet. Diese an sich bekannte Sensorik ist mit einem ebenfalls nicht dargestellten, elektronischen Steuergerät verbunden, das die erhaltenen Signale auswertet und insbesondere einen Vergleich zwischen einem vorgegebenen Sollwert der Reibkraft und dem tatsächlichen Istwert der Reibkraft vornimmt. Entsprechend dieser Auswertung der Signale werden die Antriebe 34, 34' von dem Steuergerät so angesteuert, dass durch Verschieben des Keiles 18 in oder entgegen der Drehrichtung der Bremsscheibe 14 eine Erhöhung oder Erniedrigung des Istwertes der Reibkraft erreicht wird, um den Reibkraft-Istwert an den Reibkraft-Sollwert heranzuführen.

Die Reibkraftregelung der Bremse 10 wird im dargestellten Ausführungsbeispiel über eine Positionsregelung des Keiles 18 erreicht. Regelungstechnisch ist dies vorteilhaft, da zwischen der Keilposition und dem Reibungskoeffizienten $\mu$ lediglich ein linearer Zusammenhang besteht, der sich einfach, schnell und zuverlässig regeln lässt, beispielsweise mit einer Kaskadenregelung, die einen äußeren Regelkreis und einen inneren Regelkreis umfasst. Im äußeren Regelkreis ist das (gewünschte) Bremsmoment die Regelgröße, während die Keilposition die Stellgröße ist. Im inneren Regelkreis ist die Keilposition die Regelgröße, während die Stellgröße der Motorstrom oder auch die Motorspannung der Elektromotoren 36, 36' der Antriebe 34, 34' ist. Die Position des Keiles 18 lässt sich aufgrund der im Normalfall spielfreien Betätigung des Keiles 18 präzise durch die genannten Drehwinkelgeber bestimmen, die in den Elektromotoren 36, 36' enthalten sind.

Im gezeigten Ausführungsbeispiel ist der Steigungswinkel $\alpha$ über den Zustellweg der Bremse 10, genauer des Keiles 18, konstant. Bei nicht dargestellten Ausführungsformen ist der Steigungswinkel $\alpha$ degressiv, d.h. er nimmt mit fortschreitendem Zustellweg ab.

**Patentansprüche**

1. Elektromechanische Bremse (10), insbesondere für Fahrzeuge, mit einem elektrischen Aktuator, der eine Betätigungskraft erzeugt und auf zumindest ein Reibglied (16) wirkt, um dieses zum Hervorrufen einer Reibkraft gegen ein drehbares, abzubremsendes Bauteil (14) der Bremse zu drücken, und einer zwischen dem Reibglied (16) und dem elektrischen Aktuator angeordneten Selbstverstärkungseinrichtung, die zur Selbstverstärkung der vom elektrischen Aktuator erzeugten Betätigungskraft führt und wenigstens einen Keil (18) mit einem Steigungswinkel $\alpha$ aufweist, der sich an einem zugehörigen Widerlager (22) abstützt,
**dadurch gekennzeichnet, dass** der elektrische Aktuator zwei Antriebe (34, 34') aufweist, die auf den Keil (18) wirken und die zum Erzeugen der Betätigungskraft gegeneinander arbeiten können, und dass die beiden Antriebe (34, 34') im Bereich geringer Betätigungskräfte, d.h. in einem Bereich tan $\alpha$ $\cong$ $\mu$, wobei $\mu$ der zwischen dem Reibglied (16) und dem abzubremsenden Bauteil (14) herrschende Reibungskoeffizient ist, zur Erzeugung der Betätigungskraft gegeneinander arbeiten.

2. Bremse nach Anspruch 1,
**dadurch gekennzeichnet, dass** die beiden Antriebe (34, 34') im Bereich geringer Betätigungskräfte zur Erzeugung der Betätigungskraft an dem Keil (18) ziehen, derart, dass ein die Betätigungskraft darstellender Zugkraftüberschuss in Betätigungsrichtung resultiert.

**3.** Bremse nach Anspruch 1,
**dadurch gekennzeichnet, dass** die beiden Antriebe (34, 34') im Bereich geringer Betätigungskräfte zur Erzeugung der Betätigungskraft auf den Keil (18) drücken, derart, dass ein die Betätigungskraft darstellender Druckkraftüberschuss in Betätigungsrichtung resultiert.

**4.** Bremse nach einem der Ansprüche 1 bis 3,
**dadurch gekennzeichnet, dass** die Arbeitsrichtung der beiden Antriebe (34, 34') umsteuerbar ist, und dass die beiden Antriebe (34, 34') zur Erzielung höherer Betätigungskräfte miteinander arbeiten.

**5.** Bremse nach einem der vorhergehenden Ansprüche,
**dadurch gekennzeichnet, dass** die beiden Antriebe (34, 34') als Linearaktuatoren ausgeführt sind.

**6.** Bremse nach Anspruch 5,
**dadurch gekennzeichnet, dass** jeder Linearaktuator einen Elektromotor (36, 36') mit integrierter Spindelmutter, eine als Schubstange (38, 38') ausgebildete Spindel und einen Drehwinkelgeber aufweist.

**7.** Bremse nach Anspruch 6,
**dadurch gekennzeichnet, dass** der Keil (18) positionsgeregelt ist.

**8.** Bremse nach Anspruch 7,
**dadurch gekennzeichnet, dass** die Positionsregelung eine Kaskadenregelung ist mit einem äußeren Regelkreis, dessen Regelgröße das Bremsmoment und dessen Stellgröße die Position des mit dem Keil (18) verbundenen Reibgliedes (16) ist, und einem inneren Regelkreis, dessen Regelgröße die aus den Positionssignalen der Linearaktuatoren ermittelte Position des mit dem Keil (18) verbundenen Reibgliedes (16) und dessen Stellgröße der Motorstrom oder die Motorspannung der Elektromotoren (36, 36') der Linearaktuatoren ist.

**9.** Bremse nach einem der vorhergehenden Ansprüche,
**dadurch gekennzeichnet, dass** der Keil (18) für jede der beiden Drehrichtungen des abzubremsenden Bauteils wenigstens eine Keilfläche (20, 20') mit insbesondere dem gleichen Steigungswinkel $\alpha$ aufweist.

**10.** Bremse nach einem der vorhergehenden Ansprüche,
**dadurch gekennzeichnet, dass** das Widerlager (22) sich an einem das abzubremsende Bauteil (14) übergreifenden Sattel (26) abstützt.

**11.** Bremse nach Anspruch 10,
**dadurch gekennzeichnet, dass** das abzubremsende Bauteil (14) eine Bremsscheibe und der Sattel (26) ein Schwimmsattel ist.

**12.** Bremse nach einem der vorhergehenden Ansprüche,
**dadurch gekennzeichnet, dass** eine Einrichtung zum Vergleichen eines Sollwertes der Reibkraft mit dem Istwert der Reibkraft vorhanden ist, die bei einer Abweichung des Istwertes vom Sollwert den elektrischen Aktuator zum entsprechenden Erhöhen oder Verringern der erzeugten Betätigungskraft ansteuert und so den Istwert dem Sollwert der Reibkraft angleicht.

**13.** Bremse nach einem der vorhergehenden Ansprüche,
**dadurch gekennzeichnet, dass** der Steigungswinkel $\alpha$ mit zunehmender Verschiebung des Keiles (18) in Betätigungsrichtung abnimmt.

**Claims**

**1.** Electromechanical brake (10), especially for vehicles, comprising an electrical actuator generating an actuation force and acting upon at least one friction member (16) in order to press said member to elicit a friction force against a rotational component (14), which is to be braked, of the brake, and a self-boosting device arranged between the friction member (16) and the electrical actuator, said device serving to self-boost the actuation force generated by the electrical actuator, and having at least one wedge (18) with an angle of inclination $\alpha$ that is supported on an associated counter bearing (22),
**characterized in that** the electrical actuator has two drive mechanisms (34, 34') which act on the wedge (18) and can work against each other to generate the actuation force, and that in the range of low actuation forces, i.e. in a range $\tan \alpha \cong \mu$, where $\mu$ is the coefficient of friction between the friction member (16) and the component (14) to be braked, the two drive mechanisms (34, 34') work against each other to generate the actuation force.

**2.** Brake according to Claim 1,
**characterized in that** in the range of low actuation forces, the two drive mechanisms (34, 34') pull on the wedge (18) to generate the actuation force, in such a way that a tensile force excess in the actuation direction, representing the actuation force, results.

**3.** Brake according to Claim 1,
**characterized in that** in the range of low actuation forces, the two drive mechanisms (34, 34') press on the wedge (18) to generate the actuation force, in such a way that a compressive force excess in the actuation direction, representing the actuation force, results.

4.  Brake according to one of Claims 1 to 3, **characterized in that** the working direction of the two drive mechanisms (34, 34') can be reversed, and that the two drive mechanisms (34, 34') work together to achieve higher actuation forces.

5.  Brake according to one of the preceding claims, **characterized in that** the two drive mechanisms (34, 34') are in the form of linear actuators.

6.  Brake according to Claim 5, **characterized in that** each linear actuator has an electric motor (36, 36') with integrated spindle nut, a spindle in the form of a connecting rod (38, 38') and a rotation angle sensor.

7.  Brake according to Claim 6, **characterized in that** the position of the wedge (18) is controlled.

8.  Brake according to Claim 7, **characterized in that** the position control is a cascade control with an outer control loop, the controlled variable of which is the braking moment and the manipulated variable of which is the position of the friction member (16) which is joined to the wedge (18), and with an inner control loop, the controlled variable of which is the position, which is determined from the position signals of the linear actuators, of the friction member (16) which is joined to the wedge (18), and the manipulated variable is the motor current or motor voltage of the electric motors (36, 36') of the linear actuators.

9.  Brake according to one of the preceding claims, **characterized in that** the wedge (18) for each of the two directions of rotation of the component to be braked has at least one wedge surface (20, 20'), with, in particular, the same angle of inclination $\alpha$.

10.  Brake according to one of the preceding claims, **characterized in that** the counter bearing (22) is supported on a caliper (26) which overlaps the component (14) to be braked.

11.  Brake according to Claim 10, **characterized in that** the component (14) to be braked is a brake disc and the caliper (26) is a sliding caliper.

12.  Brake according to one of the preceding claims, **characterized in that** there is a device to compare a setpoint value of the friction force with the actual value of the friction force, and when the actual value deviates from the setpoint value, the device triggers the electrical actuator to increase or reduce the generated actuation force correspondingly, and thus make the actual value of the friction force equal to the setpoint value.

13.  Brake according to one of the preceding claims, **characterized in that** the angle of inclination $\alpha$ decreases as the wedge (18) is increasingly moved in the actuation direction.

**Revendications**

1.  Frein électromécanique (10), en particulier pour véhicules, comportant un actionneur électrique qui produit une force d'actionnement et qui agit sur au moins un organe de friction (16) pour pousser celui-ci afin de provoquer une force de friction contre un composant (14) rotatif à freiner, et comportant un dispositif autoamplificateur agencé entre l'organe de friction (16) et l'actionneur électrique, qui mène à une autoamplification de la force d'actionnement produite par l'actionneur électrique et présente au moins un coin (18) avec un angle d'inclinaison $\alpha$ qui prend appui sur un contre-appui (22) associé, **caractérisé en ce que** l'actionneur électrique présente deux entraînements (34, 34') qui agissent sur le coin (18) et qui peuvent travailler l'un contre l'autre pour produire la force d'actionnement, et **en ce que** pour produire la force d'actionnement, les deux entraînements (34, 34') travaillent l'un contre l'autre dans la plage de forces d'actionnement faibles, c'est-à-dire dans une plage $\tan \alpha \cong \mu$, $\mu$ étant le coefficient de friction régnant entre l'organe de friction (16) et le composant (14) à freiner.

2.  Frein selon la revendication 1, **caractérisé en ce que**, dans la plage de forces d'actionnement faibles, pour produire la force d'actionnement, les deux entraînements (34, 34') tirent sur le coin (18) de telle sorte qu'il en résulte un excédent de force de traction en direction d'actionnement, représentant la force d'actionnement.

3.  Frein selon la revendication 1, **caractérisé en ce que**, dans la plage de forces d'actionnement faibles, pour produire la force d'actionnement, les deux entraînements (34, 34') poussent sur le coin (18) de telle sorte qu'il en résulte un excédent de force de poussée en direction d'actionnement, représentant la force d'actionnement.

4.  Frein selon l'une des revendications 1 à 3, **caractérisé en ce que** la direction de travail des deux entraînements (34, 34') est réversible, et **en ce que** les deux entraînements (34, 34') travaillent l'un avec l'autre pour obtenir des forces d'actionnement plus élevées.

5. Frein selon l'une des revendications précédentes, **caractérisé en ce que** les deux entraînements (34, 34') sont réalisés sous forme d'actionneurs linéaires.

6. Frein selon la revendication 5, **caractérisé en ce que** chaque actionneur linéaire comprend un moteur électrique (36, 36') avec écrou de broche intégré, une broche réalisée sous forme de tige de poussée (38, 38'), et un émetteur d'angle de rotation.

7. Frein selon la revendication 6, **caractérisé en ce que** le coin (18) est régulé en position.

8. Frein selon la revendication 7, **caractérisé en ce que** le la régulation en position est une régulation en cascade avec un circuit de régulation extérieur dont la grandeur réglée est le couple de freinage et dont la grandeur de commande est la position de l'organe de friction (16) relié au coin (18), et avec un circuit de régulation intérieur dont la grandeur réglée est la position déterminée à partir des signaux de position des actionneurs linéaires, de l'organe de friction (16) relié au coin (18) et dont la grandeur de commande est le courant moteur ou la tension moteur des moteurs électriques (36, 36') des actionneurs linéaires.

9. Frein selon l'une des revendications précédentes, **caractérisé en ce que** le coin (18) présente pour chacun des deux sens de rotation du composant à freiner au moins une surface en coin (20, 20') avec en particulier le même angle d'inclinaison $\alpha$.

10. Frein selon l'une des revendications précédentes, **caractérisé en ce que** le contre-appui (22) prend appui sur un étrier (26) coiffant le composant à freiner (14).

11. Frein selon la revendication 10, **caractérisé en ce que** le composant à freiner (14) est un disque de frein et l'étrier (26) est un étrier flottant.

12. Frein selon l'une des revendications précédentes, **caractérisé en ce qu'**il est prévu un dispositif pour comparer une valeur de consigne de la force de friction à la valeur réelle de la force de friction, lequel, en cas de divergence entre la valeur réelle et la valeur de consigne, pilote l'actionneur électrique pour augmenter ou réduire de manière correspondante la force d'actionnement produite et qui met ainsi la valeur réelle au même niveau que la valeur de consigne de la force de friction.

13. Frein selon l'une des revendications précédentes, **caractérisé en ce que** l'angle d'inclinaison $\alpha$ diminue au fur et à mesure du déplacement du coin (18) en direction d'actionnement.

Fig. 1

Fig. 2

Fig. 3

Fig. 4

Fig. 5

Fig. 6

Fig. 7

Fig. 8

Fig. 9

Fig. 10

Fig. 11